# EUROPÄISCHE PATENTSCHRIFT

(11) **EP 3 483 094 B1**
(45) Veröffentlichungstag und Bekanntmachung des Hinweises auf die Patenterteilung: **15.04.2020**
(21) Anmeldenummer: 18201682.4
(22) Anmeldetag: 22.10.2018
(51) Int. Cl.: B65G 23/44, F16H 7/08

(54) **SENSORANORDNUNG ZUR BESTIMMUNG EINER VERÄNDERLICHEN SPANNUNG EINES UMLAUFENDEN KETTEN- ODER RIEMENTRIEBES**
SENSOR ARRANGEMENT FOR DETERMINING A VARIABLE TENSION OF A CIRCUMFERENTIALLY MOVED CHAIN OR BELT DRIVE
DISPOSITIF CAPTEUR À DÉTERMINER UNE TENSION VARIABLE D'UN ENTRAÎNEMENT PAR COURROIE OU PAR CHAÎNE DÉPLACÉ CIRCONFÉRENTIELLEMENT

(30) Priorität: 13.11.2017 DE 102017126569
(43) Veröffentlichungstag der Anmeldung: 15.05.2019
(73) Patentinhaber: SICK AG, 79183 Waldkirch (DE)
(72) Erfinder: Selinger, Andreas, 79341 Kenzingen (DE)

(56) Entgegenhaltungen:
- DE-A1- 10 049 505
- DE-A1-102011 083 517
- DE-U1-202015 104 860
- US-A1- 2003 199 349

## Beschreibung

Die Erfindung betrifft eine Sensoranordnung zur Bestimmung einer veränderlichen Spannung eines umlaufenden Ketten- oder Riementriebes, umfassend ein an einem Grundkörper befestigtes Federelement, das mit dem Ketten-oder Riementrieb in einer Wirkverbindung steht und einen induktiven Sensor, welcher spannungsabhängige Änderungen des Federelementes überwacht, sowie ein Spannsystem zur Verwendung der Sensoranordnung.

Spannsysteme werden insbesondere bei Förderanlagen genutzt, um Schwingungen, Verschleiß oder Temperaturschwankungen, die sich in Längsausdehnungen ausdrücken, abzufangen.

Aus der DE 20 2015 104 860 U1 ist eine Ketten- oder Riemenspannvorrichtung für eine Kette oder einen Riemen an einer Förderanlage bekannt, welche ein Basiselement, ein Kettenführungsprofil mit einem Führungselement für die Kette oder den Riemen, der verschiebbar in oder an dem Basiselement gelagert ist und eine zwischen dem Basiselement und dem Kettenführungsprofil wirkendes Federelement aufzeigt. Am Basiselement ist ein induktiver Sensor angebracht, wobei am Kettenführungsprofil der zum Sensor weisenden Seite ein metallisches Initiatorelement angeordnet ist. Mittels dieser Anordnung wird eine bestimmte Position des Kettenführungsprofils gegenüber dem Basiselement erfasst, wodurch ein Nachlassen einer Kettenspannung erfasst wird.

Bei solchen Spannsystemen für Fördersysteme ist es sehr aufwändig, den kompletten Verfahrweg zu überwachen, da der Verfahrweg deutlich größer ist als ein Detektionsbereich des induktiven Sensors.

Die DE 42 39 635 A1 zeigt ein Verfahren und eine Einrichtung zur Wegerfassung von Ventilstangenbewegungen elektropneumatischer Spannungsregler, bei welchem in einem induktiv arbeitenden Sensor eine HF-Oszillation innerhalb eines LC-Resonanzkreises zur Erzeugung eines hochfrequenten elektromagnetischen Wechselfeldes angeregt wird, wobei ein von der Ventilstange mitbewegter elektrisch leitfähiger Körper die HF-Oszillation wegabhängig bedämpft.

Die DE 100 49 505 A1 offenbart eine Kolbenstangenpositions-Erfassungsvorrichtung, welche kontinuierlich bzw. in einer Mehrfachpunktweise erfassen kann, ob sich eine Kolbenstangenposition infolge einer Zunahme bzw. Abnahme des Vorstehbetrags der Kolbenstange infolge einer Alterung geändert hat. Der Vorstehbetrag einer Stirnwand eines Zylinders wird durch eine Positionserfassungsvorrichtung erfasst, welche eine Erfassungsspule, untergebracht in einem an dem Zylinderende vorgesehenen Spulenkörper, einen an der Kolbenstange ausgebildeten Flanschabschnitt und eine Schraubenfeder umfasst. Ferner sind ein Selbstspanner und ein elektromagnetisches Ventil mit einem derartigen Positionsdetektor offenbart. Ferner ist eine Riemenspannungseinstellvorrichtung mit einem Detektor zum Erfassen der Position einer Spannrolle versehen, welche bei Zunahme bzw. Abnahme der Riemenspannung drehbar ist.

Die DE 10 2011 083 517 A1 offenbart Kettenspanner, insbesondere für einen Kettentrieb einer Brennkraftmaschine, bestehend aus einem schiebebeweglich in einem Gehäuse angeordneten, weitgehend zylindrischen Kolben, der mittels eines Hydraulikdrucks und einer in dem Gehäuse angeordneten Druckfeder aus dem Gehäuse heraus in Richtung Kettentrieb schiebbar ist, wobei ein Wegsensor vorgesehen ist, zur Messung einer Kolbenbewegung und wobei der Kolben aus einem Eisenwerkstoff und der Wegsensor eine Induktivspule ist. Aufgrund der Ausgestaltung ist der Kolbenweg direkt messbar, wodurch unmittelbar Rückschlüsse auf den Zustand des Kettentriebs gezogen werden können.

Die DE 20 2015 104 860 U1 offenbart eine Ketten- oder Riemenspannvorichtung für eine Kette oder einen Riemen an einer Förderanlage, wenigstens umfassend: ein Basiselement, ein Kettenführungsprofil mit einem Führungselement für die Kette oder den Riemen, der verschiebbar in oder an dem Basiselement gelagert ist und ein zwischen dem Basiselement und dem Kettenführungsprofil wirkendes Federelement, wobei am Basiselement ein induktiver Sensor angebracht ist und dass am Kettenführungsprofil an zum Sensor weisenden Seite wenigstens ein metallisches Initiatorelement angeordnet ist

Die US 20030199349 A1 offenbart einen Sensor, der in der Nähe von mindestens einer der Kanten eines Förderbandes positioniert ist und kontinuierlich die Position der Kante des Förderbandes überwacht. Wenn die Querbewegung durch den Sensor erfasst wird, dreht sich ein Verstellmotor, um ein Ende einer nicht angetriebenen Riemenscheibe zu bewegen und für die Querbewegung einzustellen. Der Sensor kann ein berührungsloser induktiver Näherungssensor, ein Proportionalsensor, wie beispielsweise ein linearer Verstellwandler oder ein lineares Potentiometer sein, das bestimmt, ob sich die Kante des Förderbandes durch Überwachung des Federwiderstands seitlich bewegt hat, oder ein Halleffekt-Sensor.

Der Erfindung liegt die Aufgabe zugrunde, eine Sensoranordnung zur Bestimmung einer veränderlichen Spannung eines umlaufenden Ketten- oder Riementriebes anzugeben, bei welcher der Detektionsbereich des Sensors kleiner ist als der Verfahrweg und trotzdem die veränderliche Spannung zuverlässig bestimmt werden kann.

Erfindungsgemäß ist die Aufgabe mit den Merkmalen des Anspruchs 1 gelöst. Dies hat den Vorteil, dass durch die Betrachtung der Stauchung der Druckfeder, bei welcher sich die Abstände zwischen den Federwindungen der Druckfeder verringern, auch längere Verfahrwege ausgewertet werden können, die außerhalb des Detektionsbereiches des Sensors liegen. Damit ist eine einfache Erfassung der Abstandsänderung der Federwindungen infolge von Schwingungen, Verschleiß oder Temperaturschwankungen möglich.

Die axiale Anordnung des Sensors verringert den beanspruchten Bauraum für die Sensoranordnung und erhöht somit die Einsatzmöglichkeiten der Sensoranordnung. Die Druckfeder kann auch als Spiralfeder ausgebildet sein. Gemäß der Erfindung ist der induktive Sensor innerhalb der Druckfeder angeordnet, wobei ein Innendurchmesser der Druckfeder größer als ein Außendurchmesser des induktiven Sensors ist. Dadurch wird sichergestellt, dass kein mechanischer Kontakt zwischen Druckfeder und Sensor auftritt und durch die berührungslose Detektion des Abstandes der Federwindungen der Spannungszustand des Ketten- oder Riementriebes zuverlässig ermittelt werden kann.

In einer Ausgestaltung erstreckt sich der induktive Sensor radial zu der Druckfeder. Diese Anordnung lässt eine besonders genaue Erfassung des sich ändernden Abstandes zu, da der Detektionsbereich des Sensors nahe an die Federwindungen herangebracht werden kann.

In einer Variante besteht die Druckfeder aus einem Stahl. Durch die Ausbildung der gesamten Druckfeder aus Stahl wird eine besonders bauraumfreundliche und kostenreduzierende Sensoranordnung geschaffen.

Vorteilhafterweise umfasst der induktive Sensor einen Schwingkreis, dessen Bedämpfung proportional zur veränderlichen Spannung ist. Da bei der Stauchung der Druckfeder durch das Zusammendrücken der Federwindungen durch den induktiven Sensor mehr Metall detektiert wird, erhöht sich die Bedämpfung des Schwingkreises, welches als Signal für die geänderte Spannung verwertet wird.

In Weiterbildung der Erfindung weist der induktive Sensor einen analogen und/oder digitalen Ausgang und/oder eine I/O-Link Schnittstelle auf, wobei programmierbare Statusinformationen ausgebbar sind.

Durch eine im induktiven Sensor verbaute Signalauswertung bzw. Steuer- und Auswerteeinheit kann eine Information über die vorhandene Spannung deutlich sichtbar gemacht werden, beispielsweise über eine Änderung der Ausgangsspannung oder über einen IO-Link, über den eine entsprechende Information ausgegeben wird. Dabei können beispielsweise die Werte ,volle Druckspannung', ,halbe Druckspannung' oder ,keine Druckspannung' über den Ausgang ausgegeben werden.

Um Schwingungen zu überwachen, ist ein Beschleunigungssensor in dem induktiven Sensor integriert. Mittels dieser Schwingungsüberwachung können Rückschlüsse auf die Lebensdauer der Sensoranordnung, insbesondere des Federlagers, gezogen werden.

Eine Weiterbildung der Erfindung umfasst ein Spannsystem für einen Ketten- oder Riementrieb, insbesondere für eine Förderanlage, mit einer Sensoranordnung zur Bestimmung einer veränderlichen Spannung des Ketten- oder Riementriebes. Um ein Spannsystem anzugeben, bei welchem der Detektionsbereich des Sensors kleiner ist als der Verfahrweg und trotzdem die veränderliche Spannung zuverlässig bestimmt werden kann, ist die Sensoranordnung nach mindestens einem in dieser Schutzrechtsanmeldung beschriebenen Merkmal ausgebildet.

Vorteilhafterweise weist die Sensoranordnung einen den Ketten- oder Riementrieb tragenden Spannkopf auf, der auf die Druckfeder aufgesetzt ist, die in einer Spannbox angeordnet ist, in welche der Spannkopf in Abhängigkeit von der Spannung eintaucht.

In einer Ausgestaltung ist die Sensoranordnung an einem Hebelarm befestigt, welcher fest mit einem Flansch der Spannbox verbunden ist. Dabei erfolgt die Überwachung der sich ändernden Spannung durch die Änderung der Bedämpfung aufgrund von Überschneidungen der Detektionsfläche des induktiven Sensors und dem Hebelarm. Der induktive Sensor ist dabei fest mit dem Flansch der Spannbox verbunden und erfährt somit keine Drehbewegung, wodurch eine Verfälschung des Messergebnisses unterbunden wird.

In einer Alternative ist die Sensoranordnung in der Spannbox angeordnet, welche eine glatte Oberfläche aufweist. Dadurch wird verhindert, dass bei der Bewegung der Druckfeder relativ zu dem innerhalb der Druckfeder angeordneten induktiven Sensor ein fehlerhaftes Sensorsignal infolge einer Berührung beider ausgegeben wird.

Die Erfindung lässt zahlreiche Ausführungsformen zu. Zwei davon sollen anhand der in der Zeichnung dargestellten Figuren näher erläutert werden.

Es zeigen:
Fig. 1 eine Prinzipdarstellung einer Förderanlage mit einer Kettenspannvorrichtung,
Fig. 2 ein erstes Ausführungsbeispiel eines erfindungsgemäßen Spannsystems mit erfindungsgemäßer Sensoranordnung,
Fig. 3 ein weiteres Ausführungsbeispiel des erfindungsgemäßen Spannsystems mit erfindungsgemäßer Sensoranordnung,
Fig. 4 ein weiteres Ausführungsbeispiel des erfindungsgemäßen Spannsystems,
Fig. 5 ein Ausführungsbeispiel für die Anwendung eines erfindungsgemäßen Spannsystems.

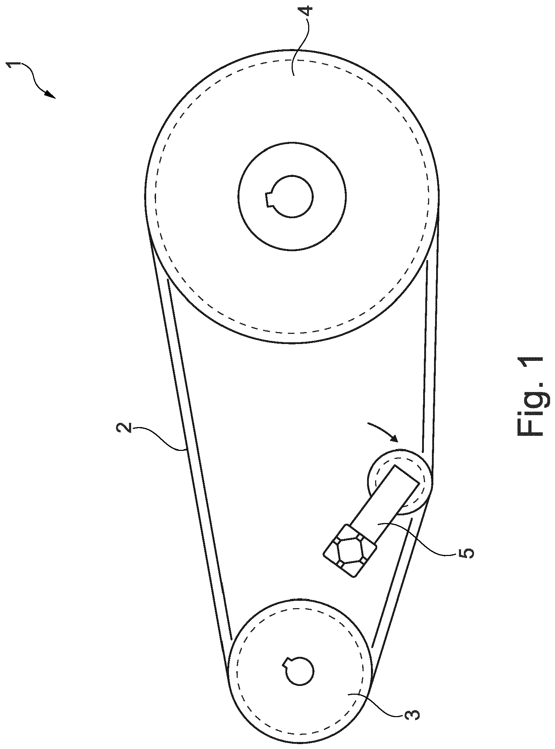

In Fig. 1 ist ein Prinzip einer Förderanlage dargestellt. In dieser Förderanlage 1 kommen angetriebene Riemen oder Ketten 2 zum Einsatz, die endlos ausgebildet sind und von einem Rad 3 umlaufend angetrieben werden und wenigstens eine weitere Umlenkstelle 4 besitzen. Dabei wird mittels eines Spannsystems 5 eine dauerhafte, gleichmäßige Vorspannung an der Kette 2 oder dem Riemen aufrechterhalten.

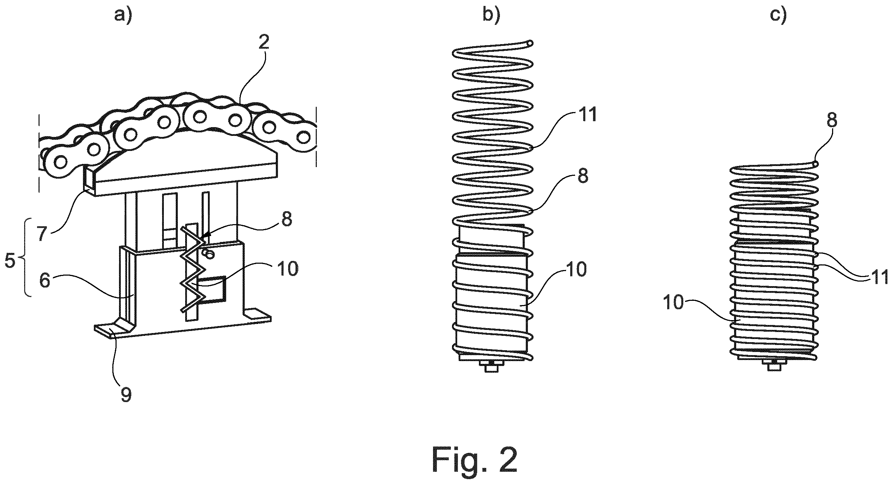

Im Weiteren soll ein Spannsystem 5 betrachtet werden, bei welcher die Vorspannung einer Kette 2 aufrechterhalten werden soll. Um Schwingungen, Verschleiß (Längsausdehnung der Kette 2) oder Temperaturschwankungen (Längsausdehnung der Kette 2) abzufangen, wird ein Spannsystem 5 verwendet, welches gemäß den Figuren 2 bis 4 aus einer Spannbox 6 und einem Spannkopf 7 gebildet ist. In der Spannbox 6 ist eine metallische Druckfeder 8 angeordnet, welche den Spannkopf 7 trägt. Die Druckfeder 8 ist an einem Grundkörper 9 der Spannbox 6 befestigt und dehnt sich innerhalb der Spannbox 6 in linearer Richtung zwischen dem Grundkörper 9 und dem Spannkopf 7 aus. Gemäß Fig. 2a ist innerhalb der Druckfeder 8 ein induktiver Sensor 10 angeordnet, dessen Detektionsbereich mehrere Federwindungen 11 der Druckfeder 8 umfasst. Innerhalb des induktiven Sensors 10 ist ein nicht weiter dargestellter LC-Schwingkreis angeordnet, der mit einer ebenfalls nicht dargestellten Signalauswertung verbunden ist. Der unbelastete Zustand der Druckfeder 8 ist in Fig. 2b gezeigt. Ändert sich der Abstand zwischen dem Grundkörper 9 und der Kette 2, so wird die Druckfeder 8 gestaucht, wie es in Fig. 2c dargestellt ist. Durch diese Stauchung detektiert der innerhalb der Druckfeder 8 angeordnete induktive Sensor 10 mehr Metall, was zu einer höheren Bedämpfung des in dem induktiven Sensor 10 verbauten Schwingkreises führt. Das Ausgangssignal des induktiven Sensors 10 liefert somit eine Information über den Spannzustand, d.h. den aufgebrachten Abstand zwischen Grundkörper 9 und Kette 2.

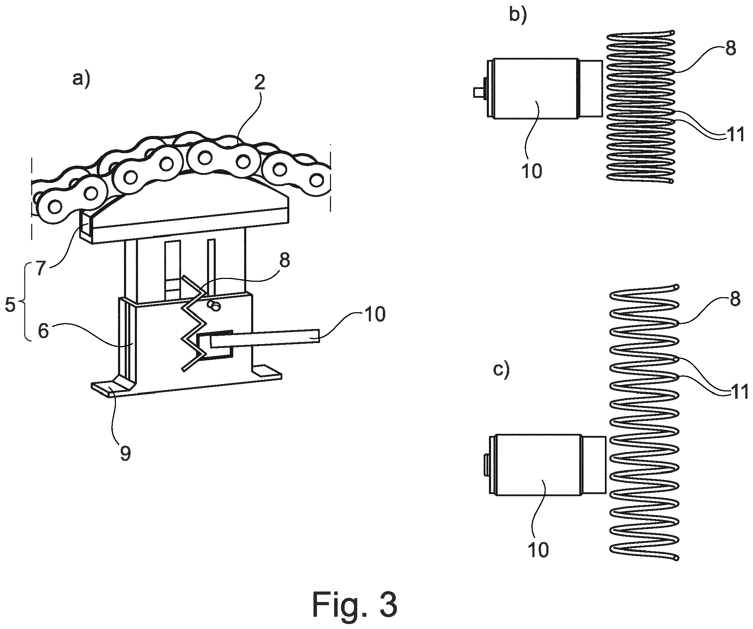

In Fig. 3 ist ein weiteres Ausführungsbeispiel des erfindungsgemäßen Spannsystems gezeigt, bei welchem der induktive Sensor 10 radial zur Druckfeder 8 angeordnet ist (Fig. 3a). Dabei ist der induktive Sensor 10 innerhalb einer Wandung der Spannbox 6 befestigt. Mittels der Druckfeder 8 wird der gesamte Verfahrweg des Spannkopfes 7 überwacht. Da der Detektionsbereich des induktiven Sensors 10 sehr klein ist, um den vollständigen Hub des Spannkopfes 7 abzubilden, erfolgt die Überwachung durch die Betrachtung der Änderung des Abstandes der Federwindungen 11 der Druckfeder 8 (Fig. 3b, 3c).

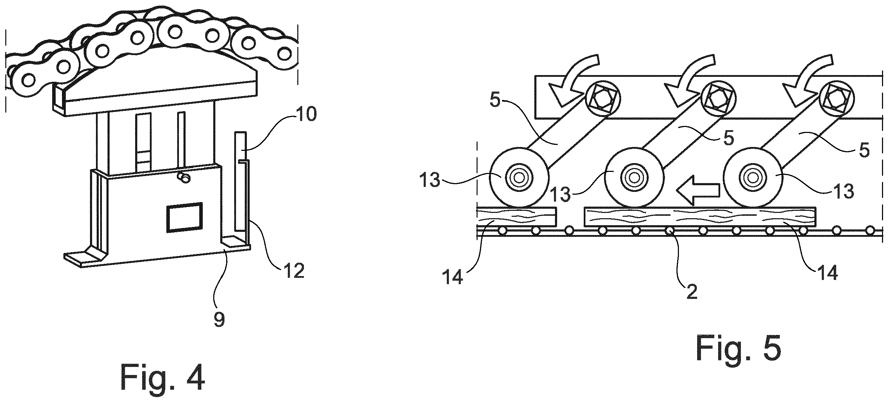

In Fig. 4 ist ein weiteres Ausführungsbeispiel des erfindungsgemäßen Spannsystems 5 und der erfindungsgemäßen Sensoranordnung dargestellt, bei welchem ein Hebelarm 12, der fest am Grundkörper 9, beispielsweise einem Flansch der Spannbox 6 befestigt ist, den induktiven Sensor 10 trägt, welcher sich parallel zur Spannbox 6 ausdehnt. Dabei erfolgt die Überwachung der Bewegung des Spannkopfes 7 durch die Änderung der Bedämpfung des Schwingkreises, welcher in dem induktiven Sensor 10 enthalten ist, aufgrund von einer Änderung des Abstands zwischen Detektionsfläche vom Sensor 10 und des Spannkopfes 7.. Da der induktive Sensor 10 fest an dem Grundkörper 9 angeordnet ist, erfährt dieser somit keinerlei Bewegung.

Gemäß Figur 5 erfolgt die Überwachung der Anpresskraft bzw. Dicke von Werkstücken bzw. Objekten. Das Förderband 2 ist beispielsweise ein Rollenförderband, welches die Objekte 14 fördert. Das Förderband ist fixiert und kann nicht nachgeben. Erfolgt eine Änderung der Dicke der Objekte 14 wird sich der Winkel des Spannsystems 5 ändern. Das Spannsystem weist einen Hebelarm und eine Anpressrolle 13 auf. Dadurch, dass der Sensor das Spannsystem 5 erfasst, wird der Sensor die Winkeländerung erfassen, wodurch die Anpresskraft bzw. die Dicke der Objekte erfassbar ist.

Durch die vorgeschlagene Lösung kann der aktuelle Spannzustand des Ketten-oder Riementriebes besser überwacht werden. Gleichzeitig ist auch eine Langzeitmessung möglich. Somit besteht die Möglichkeit, rechtzeitig eine Wartung einzuplanen und Störungen zu vermeiden. Des Weiteren können Schwingungen im Antrieb vermessen werden, um Rückschlüsse auf die Einsatzfähigkeit der Förderanlage zu treffen. Zusätzlich können die Schwingungen Informationen über den Einsatz der Förderanlage geben, z.B. über Drehmomentschwankungen oder ob ein konstantes Drehmoment eingestellt ist. Das vorgeschlagene System kann auch in anderen Bereichen angewandt werden, z.B. bei Schwingungsdämpfern, wo durch die Federüberwachung eine Schwingungsamplitude aufgenommen werden kann. In Prozessen kann mit der vorgeschlagenen Lösung überwacht werden, ob eine Feder überlastet wird, indem diese bis auf Blocklänge gestaucht wird oder ob eine Zugfeder zu stark ausgelenkt wird.

Bei der alternativen Verwendung von Spannhebeln anstelle der Spannbox ist der Weg für die Detektion des kompletten Spannbereiches mit einem induktiven Sensor normalerweise nicht geeignet. Somit erfolgt die Detektion des Spannweges bzw. eine Winkelveränderung nicht direkt am Ketten- bzw. Spannrad, sondern am Grundkörper. Die Verwendung von Spannhebeln eignet sich aufgrund von relativ einfachem Aufbau für eine optimale Nachrüstung, sowie für die Serienausrüstung, da keine Nacharbeiten notwendig sind. Die Befestigung erfolgt durch einen Adapter. Darüber hinaus können unterschiedliche Spannhebelgrößen verwendet werden. Das ausgegebene Signal hat dabei eine hohe Signalamplitude.

## Patentansprüche

1. Sensoranordnung zur Bestimmung einer veränderlichen Spannung eines umlaufenden Ketten- oder Riementriebes, umfassend ein an einem Grundkörper (9) befestigtes Federelement (8), das mit dem Ketten- oder Riementrieb in einer Wirkverbindung steht und einen induktiven Sensor (10), welcher spannungsabhängige Änderungen des Federelementes (8) überwacht, wobei der induktive Sensor (10) zur Detektion eines veränderlichen Abstandes von mehreren Federwindungen (11) des als metallische Druckfeder ausgebildeten Federelementes (8) zueinander, direkt gegenüberliegend diesen Federwindungen (11) angeordnet ist, **dadurch gekennzeichnet, dass** der induktive Sensor (10) axial innerhalb der Druckfeder (8) angeordnet ist, wobei ein Innendurchmesser der Druckfeder (8) größer als ein Außendurchmesser des induktiven Sensors (10) ist.

2. Sensoranordnung nach Anspruch 1, **dadurch gekennzeichnet, dass** der induktive Sensor (10) sich axial zu der Druckfeder (8) erstreckt.

3. Sensoranordnung nach Anspruch 1, **dadurch gekennzeichnet, dass** der induktive Sensor (10) sich radial zu der Druckfeder (8) erstreckt.

4. Sensoranordnung nach mindestens einem der vorhergehenden Ansprüche, **dadurch gekennzeichnet, dass** der induktive Sensor (10) einen Schwingkreis umfasst, dessen Bedämpfung proportional zur veränderlichen Spannung ist.

5. Sensoranordnung nach mindestens einem der vorhergehenden Ansprüche, **dadurch gekennzeichnet, dass** der induktive Sensor einen analogen und/oder digitalen Ausgang und/oder eine I/O-Link Schnittstelle aufweist, wobei programmierbare Statusinformationen ausgebbar sind.

6. Sensoranordnung nach mindestens einem der vorhergehenden Ansprüche, **dadurch gekennzeichnet, dass** ein Beschleunigungssensor zur Überwachung von Schwingungen in dem induktiven Sensor (10) integriert ist.

7. Spannsystem für einen Ketten- oder Riementrieb, mit einer Sensoranordnung zur Bestimmung einer veränderlichen Spannung des Ketten- oder Riementriebes, **dadurch gekennzeichnet, dass** die Sensoranordnung nach mindestens einem der vorhergehenden Ansprüche ausgebildet ist.

8. Spannsystem nach Anspruch 7 für eine Förderanlage.

9. Spannsystem nach Anspruch 7 oder 8, **dadurch gekennzeichnet, dass** die Sensoranordnung einen den Ketten- oder Riementrieb tragenden Spannkopf (7) aufweist, der auf die Druckfeder (8) aufgesetzt ist, die in einer Spannbox (6) angeordnet ist, in welche der Spannkopf (7) in Abhängigkeit von der Spannung eintaucht.

10. Spannsystem nach Anspruch 7, 8 oder 9, **dadurch gekennzeichnet, dass** die Sensoranordnung an einem Hebelarm (12) befestigt ist, welcher fest mit einem Flansch (9) der Spannbox (6) verbunden ist.

11. Spannsystem nach Anspruch 7, 8 oder 9, **dadurch gekennzeichnet, dass** die Sensoranordnung in der Spannbox (6) angeordnet ist, welche eine glatte Innenfläche aufweist.

## Claims

1. A sensor arrangement for determining a variable tension of a revolving chain drive or belt drive comprising a spring element (8) that is fastened to a base body (9) and that is actively connected to the chain drive or belt drive and an inductive sensor (10) that monitors tension-dependent changes of the spring element (8), wherein the inductive sensor (10) for detecting a variable mutual distance of a plurality of spring windings (11) of the spring element (8) formed as a metallic compression spring is arranged directly opposite said spring windings (11),
**characterized in that** the inductive sensor (10) is axially arranged within the compression spring (8), with an inner diameter of the compression spring (8) being greater than an outer diameter of the inductive sensor (10).

2. A sensor arrangement in accordance with claim 1, **characterized in that** the inductive sensor (10) extends axially with respect to the compression spring (8).

3. A sensor arrangement in accordance with claim 1, **characterized in that** the inductive sensor (10) extends radially with respect to the compression spring (8).

4. A sensor arrangement in accordance with at least one of the preceding claims, **characterized in that** the inductive sensor (10) comprises a resonant circuit whose damping is proportional to the variable tension.

5. A sensor arrangement in accordance with at least one of the preceding claims, **characterized in that** the inductive sensor has an analog and/or digital output and/or an I/O link interface, with programmable status information being able to be output.

6. A sensor arrangement in accordance with at least one of the preceding claims, **characterized in that** an acceleration sensor is integrated in the inductive sensor (10) for monitoring oscillations.

7. A tensioning system for a chain drive or belt drive having a sensor arrangement for determining a variable tension of the chain drive or belt drive, **characterized in that** the sensor arrangement is configured in accordance with at least one of the preceding claims.

8. A tensioning system in accordance with claim 7 for a conveyor system.

9. A tensioning system in accordance with claim 7 or claim 8, **characterized in that** the sensor arrangement has a tensioning head (7) that supports the chain drive or belt drive and that is placed on the compression spring (8) that is arranged in a tensioning box (6) into which the tensioning head (7) dips in dependence on the tension.

10. A tensioning system in accordance with claim 7, claim 8, or claim 9, **characterized in that** the sensor arrangement is fastened to a lever arm (12) that is fixedly connected to a flange (9) of the tensioning box (6).

11. A tensioning system in accordance with claim 7, claim 8, or claim 9, **characterized in that** the sensor arrangement is arranged in the tensioning box (6) that has a smooth inner surface.

## Revendications

1. Ensemble capteur pour déterminer une tension variable d'un entraînement à chaîne ou à courroie en circulation, comprenant un élément ressort (8) fixé à un corps de base (9) et étant en liaison d'action avec l'entraînement à chaîne ou à courroie, et un capteur inductif (10) qui surveille les modifications de l'élément ressort (8) dépendantes de la tension,
dans lequel
en vue de détecter une distance mutuelle variable entre plusieurs spires de ressort (11) de l'élément ressort (8) réalisé sous forme de ressort de compression métallique, le capteur inductif (10) est disposé directement en face de ces spires de ressort (11),
**caractérisé en ce que**
le capteur inductif (10) est disposé axialement à l'intérieur du ressort de compression (8), un diamètre intérieur du ressort de compression (8) étant supérieur à un diamètre extérieur du capteur inductif (10).

2. Ensemble capteur selon la revendication 1, **caractérisé en ce que** le capteur inductif (10) s'étend axialement par rapport au ressort de compression (8).

3. Ensemble capteur selon la revendication 1, **caractérisé en ce que** le capteur inductif (10) s'étend radialement par rapport au ressort de compression (8).

4. Ensemble capteur selon l'une au moins des revendications précédents, **caractérisé en ce que** le capteur inductif (10) comprend un circuit oscillant dont l'amortissement est proportionnel à la tension variable.

5. Ensemble capteur selon l'une au moins des revendications précédents, **caractérisé en ce que** le capteur inductif présente une sortie analogique et/ou numérique et/ou une interface dite I/O-Link, permettant de sortir des informations d'état programmables.

6. Ensemble capteur selon l'une au moins des revendications précédents, **caractérisé en ce que** un capteur d'accélération pour la surveillance des oscillations est intégré dans le capteur inductif (10).

7. Système tendeur pour un entraînement à chaîne ou à courroie, comportant un ensemble capteur pour déterminer une tension variable de l'entraînement à chaîne ou à courroie, **caractérisé en ce que** l'ensemble capteur est réalisé selon l'une au moins des revendications précédentes.

8. Système tendeur selon la revendication 7 destiné à une installation de convoyage.

9. Système tendeur selon la revendication 7 ou 8, **caractérisé en ce que** l'ensemble capteur comporte une tête de tensionnement (7) portant l'entraînement à chaîne ou à courroie, qui est rapportée sur le ressort de compression (8) disposé dans une boîte de tensionnement (6) dans laquelle la tête de tensionnement (7) est immergée en fonction de la tension.

10. Système tendeur selon la revendication 7, 8 ou 9, **caractérisé en ce que** l'ensemble capteur est fixé à un bras de levier (12) qui est fermement relié à une bride (9) de la boîte de tensionnement (6).

11. Système tendeur selon la revendication 7, 8 ou 9, **caractérisé en ce que** l'ensemble capteur est disposé dans la boîte de tensionnement (6) qui présente une surface intérieure lisse.
